# EUROPÄISCHE PATENTSCHRIFT

(11) **EP 3 600 952 B1**
(45) Veröffentlichungstag und Bekanntmachung des Hinweises auf die Patenterteilung: **05.01.2022**
(21) Anmeldenummer: 18708687.1
(22) Anmeldetag: 05.03.2018
(51) Int. Cl.: B60N 2/00, B60N 2/02, B60N 2/18, B64D 25/00, B64D 11/06

(54) **PASSAGIERSITZ MIT EINEM MANUELL ERWEITERBAREN SITZELEMENT UND PASSAGIERKABINENBEREICH**
PASSENGER SEAT WITH A MANUALLY EXTENDABLE SEATING ELEMENT AND PASSENGER CABIN AREA
SIÈGE DE PASSAGER À ÉLÉMENT DE SIÈGE MANUELLEMENT EXTENSIBLE ET ESPACE CABINE PASSAGER

(30) Priorität: 23.03.2017 DE 102017204886
(43) Veröffentlichungstag der Anmeldung: 05.02.2020
(73) Patentinhaber: Airbus Operations GmbH, 21129 Hamburg (DE)
(72) Erfinder: CORDES, Frank, 21129 Hamburg (DE); JAFFRELOT, Jean-Baptiste, 21129 Hamburg (DE)
(74) Vertreter: Schicker, Silvia
(86) Internationale Anmeldenummer: PCT/EP2018/055300
(87) Internationale Veröffentlichungsnummer: WO 2018/172045

(56) Entgegenhaltungen:
- WO-A1-2010/086785
- DE-A1-102010 046 853
- US-A1- 2005 062 324
- US-B2- 7 083 146

## Beschreibung

Die Erfindung betrifft einen Passagiersitz, der zum Einsatz in der Passagierkabine eines Flugzeugs, aber auch zum Einsatz in anderen Verkehrsmitteln, wie zum Beispiel Bussen oder Zügen geeignet ist. Ferner betrifft die Erfindung einen mit einem derartigen Passagiersitz ausgestatteten Passagierkabinenbereich.

In modernen Verkehrsmitteln, insbesondere in Flugzeugen, ist die optimale Ausnutzung des in einer Passagierkabine zur Verfügung stehenden Raums von großer wirtschaftlicher Bedeutung. Daher werden, insbesondere in der Economy Class einer Flugzeugpassagierkabine, hintereinander angeordnete Sitzreihen in möglichst geringen Abständen voneinander positioniert. In zu Notausgängen benachbarten Bereichen einer Flugzeugpassagierkabine ist es jedoch erforderlich, zwischen hintereinander angeordneten Sitzreihen Quergänge vorzusehen, die einen sich entlang einer Längsachse der Flugzeugpassagierkabine erstreckenden Hauptgang mit den sich beispielsweise oberhalb der Flügel befindlichen Notausgängen verbinden. Um im Fall einer Notevakuierung einen schnellen Passagierstrom zu den Notausgängen zu ermöglichen, müssen diese Quergänge eine vorgegebene Breite von beispielsweise 33,02 cm (13 Zoll) haben. Dementsprechend müssen an die Quergänge angrenzende Sitzreihen in einem relativ weiten Abstand voneinander angeordnet sein.

Die EP 1 452 444 B1 bzw. die US 7,083,146 B1 beschreibt eine Sitzreihenanordnung für eine Passagierkabine eines Verkehrsflugzeuges mit hintereinander angeordneten Sitzreihen, wobei die Sitzreihen mit vorbestimmten Sitzabständen angeordnet sind. Im Bereich von Ausgängen ist ein durch einen vergrößerten Sitzabstand der Sitzreihen gebildeter Quergang als Zugang zu den Ausgängen vorgesehen. Mindestens eine an den Quergang angrenzende Sitzreihe ist mit Passagiersitzen mit hochklappbarem Sitzteil ausgestattet, sodass die Breite des Querganges durch das Hochschwenken des entsprechenden Sitzteils in eine größere Breite wandelbar ist.

Die US 7,083,146 B1 beschreibt einen zur Installation in einer Flugzeugpassagierkabine vorgesehenen Passagiersitz, der ein zwischen einer normalen Sitzkonfiguration und einer hochgeklappten Notfall-Evakuierungskonfiguration verschwenkbares Sitzelement umfasst.

Die DE 10 2010 046 853 A1 offenbart ein Passagiersitzssystem mit einem Sitz, der einen ersten Teilabschnitt sowie einen zweiten Teilabschnitt umfasst. In einer ersten Betriebsposition des Sitzes sind der erste Teilabschnitt und der zweite Teilabschnitt bezüglich einer Rückenlehne des Sitzes derart hintereinander positioniert, dass eine erste Oberfläche des ersten Teilabschnitts und eine erste Oberfläche des zweiten Teilabschnitts eine nutzbare Gesamtsitzfläche bilden. In einer zweiten Betriebsposition des Sitzes sind der erste Teilabschnitt und der zweite Teilabschnitt bezüglich der Rückenlehne dagegen derart übereinander positioniert das eine der Oberflächen des ersten Teilabschnitts oder eine der Oberflächen des zweiten Teilabschnitts eine nutzbare Teilsitzfläche bildet.

Aus der WO 2010/086785 A1 ist ein Passagiersitz mit einer Fußablage bekannt, die zwischen einer Verstauposition und einer ausgeklappten Position bewegbar ist. Wenn sich die Fußablage in ihrer ausgeklappten Position befindet, erstreckt sich eine Ablagefläche der Fußablage im Wesentlichen koplanar zu einer Sitzfläche des Passagiersitzes.

Die US 2005/006324 A1 beschreibt einen Passagiersitz mit einem Sitzelement, das einen ersten Abschnitt umfasst, welcher drehbar an einem zweiten Abschnitt befestigt ist. Der erste Abschnitt kann durch Drehen in mehreren verschiedenen Positionen relativ zu dem zweiten Abschnitt positioniert werden.

Der Erfindung liegt die Aufgabe zugrunde, einen Passagiersitz bereitzustellen, der unter Einhaltung aller Sicherheitsanforderungen für Abmessungen von Notausgangzugängen eine optimale Ausnutzung des in der Passagierkabine eines Flugzeugs oder eines anderen Verkehrsmittels zur Verfügung stehenden Raums ermöglicht. Ferner liegt der Erfindung die Aufgabe zugrunde, einen mit einem derartigen Passagiersitz ausgestatteten Passagierkabinenbereich anzugeben.

Diese Aufgabe wird durch einen Passagiersitz mit den Merkmalen des Patentanspruchs 1 und einen Passagierkabinenbereich mit den Merkmalen des Patentanspruchs 13 gelöst.

Ein Passagiersitz umfasst eine Rückenlehne sowie ein Sitzelement. Die Rückenlehne ist vorzugsweise relativ zu dem Sitzelement zwischen einer aufrechten Position, in der sich eine Rückenlehnenfläche der Rückenlehne im Wesentlichen senkrecht zu einer Sitzfläche des Sitzelements erstreckt, und einer zurückgelehnten Position, in der die Rückenlehnenfläche der Rückenlehne mit der Sitzfläche des Sitzelements einen Winkel größer 90° bildet, verschwenkbar. Der Begriff "Sitzfläche" bezeichnet hier eine der Rückenlehne zugewandte Oberfläche des Sitzelements, auf der ein Benutzer des Passagiersitzes in üblicher Weise Platz nehmen kann. Der Begriff "Rückenlehnenfläche" bezeichnet hier eine vordere Oberfläche der Rückenlehne, an der sich ein Benutzer des Passagiersitzes in üblicher Weise anlehnen kann, wenn er auf der Sitzfläche des Sitzelements sitzt.

Das Sitzelement des Passagiersitzes umfasst einen an die Rückenlehne angrenzenden ersten Abschnitt und einen relativ zu dem ersten Abschnitt zwischen einer Ruheposition und einer Nutzungsposition verschwenkbaren zweiten Abschnitt. In seiner Nutzungsposition vergrößert der zweite Abschnitt des Sitzelements eine Tiefe einer für den Benutzer nutzbaren Sitzfläche des Sitzelements. Unter dem Begriff "Tiefe" wird hier eine Abmessung der Sitzfläche von einem der Rückenlehne zugewandten hinteren Rand des Sitzelements bis zu einem von der Rückenlehne abgewandten vorderen Rand des Sitzelements verstanden. Wenn sich der zweite Abschnitt des Sitzelements in seiner Ruheposition befindet, hat das Sitzelement eine geringere Tiefe und folglich einen geringeren Platzbedarf als in einem Betriebszustand des Passagiersitzes, in dem sich der zweite Abschnitt des Sitzelements in seiner Nutzungsposition befindet. In seiner Nutzungsposition sorgt der zweite Abschnitt des Sitzelements dagegen dafür, dass der Benutzer bequem auf dem Sitzelement, d.h. auf der Sitzfläche des Sitzelements sitzen kann.

Wenn der Passagiersitz in einer Passagierkabine eines Verkehrsmittels, beispielsweise eines Flugzeugs, verbaut ist, hat das Sitzelement in einem Betriebszustand des Passagiersitzes, in dem sich der zweite Abschnitt des Sitzelements in seiner Ruheposition befindet, somit einen größeren Abstand von einem vor dem Passagiersitz befindlichen Vordersitz als in einem Betriebszustand des Passagiersitzes, in dem sich der zweite Abschnitt des Sitzelements in seiner Nutzungsposition befindet. Der Passagiersitz kann daher in vorteilhafter Weise in einer Passagierkabine eines Verkehrsmittels angrenzend an einen Quergang verbaut werden, der einen Zugang zu weiteren, seitlich von dem Passagiersitzes angeordneten Passagiersitzen oder einem Ausgang, insbesondere einem Notausgang der Passagierkabine vermittelt. Insbesondere kann der Passagiersitz derart angrenzend an den Quergang angeordnet werden, dass das Sitzelement des Passagiersitzes dem Quergang zugewandt ist.

Im Normalbetrieb des Verkehrsmittels kann der Passagiersitz dann mit dem zweiten Abschnitt des Sitzelements in seiner Nutzungsposition in üblicher Weise und ohne Komforteinbußen für einen auf dem Passagiersitz sitzenden Passagier genutzt werden. Wenn dagegen Passagiere durch den Quergang zu den seitlich von dem Passagiersitz angeordneten Passagiersitzen oder dem Ausgang gelangen müssen, kann der zweite Abschnitt des Sitzelements in seine Ruheposition gebracht werden. Dadurch verbreitert sich der Quergang, sodass das Passieren des Quergangs deutlich erleichtert und folglich beschleunigt wird. Der Passagiersitz ermöglicht somit eine optimale Ausnutzung des in der Passagierkabine zur Verfügung stehenden Raums. Gleichzeitig können alle Sicherheitsanforderungen für Abmessungen von Zugängen zu Ausgängen, insbesondere Notausgängen eingehalten werden. Besonders vorteilhaft ist der Passagiersitz in einer Flugzeugpassagierkabine benachbart zu einem sich oberhalb eines Flügels befindlichen Notausgang einsetzbar, um eine vorgegebene Quergangbreite von 33,02 cm (13 Zoll) zu gewährleisten.

Schließlich umfasst der Passagiersitz einen Verriegelungsmechanismus, der dazu eingerichtet ist, eine Schwenkbewegung des zweiten Abschnitts des Sitzelements aus seiner Nutzungsposition in seine Ruheposition zu unterbinden, wenn eine Gewichtskraft eines auf dem Passagiersitz sitzenden Benutzers auf das Sitzelement wirkt. Durch den Verriegelungsmechanismus wird verhindert, dass der zweite Abschnitt des Sitzelements in unerwünschter Weise aus seiner Nutzungsposition in seine Ruheposition bewegt wird, wenn ein Benutzer auf dem Passagiersitz sitzt. Die Kopplung der Aktivierung des Verriegelungsmechanismus an die von einem auf dem Passagiersitz sitzenden Benutzer auf das Sitzelement aufgebrachte Gewichtskraft macht eine aktive Betätigung des Verriegelungsmechanismus durch den Benutzer unnötig und sorgt so für eine Erhöhung des Komforts für den Benutzer.

Der Verriegelungsmechanismus ist ferner dazu eingerichtet, bei einem Wegfall der auf das Sitzelement wirkenden Gewichtskraft den zweiten Abschnitt des Sitzelement für eine Schwenkbewegung aus seiner Nutzungsposition in seine Ruheposition freizugeben. Eine derartige Ausgestaltung des Verriegelungsmechanismus stellt sicher, dass der zweite Abschnitt des Sitzelements aus seiner Nutzungsposition in seine Ruheposition zurück bewegt werden kann und folglich der Platzbedarf des Sitzelements wieder verringert werden kann, sobald der Passagiersitz nicht mehr in Benutzung ist, d. h. sobald ein auf dem Passagiersitz sitzender Benutzer von dem Sitz aufsteht, ohne dass hierfür eine aktive Entriegelung des Verriegelungsmechanismus erforderlich ist.

In einer bevorzugten Ausführungsform des Passagiersitzes ist der zweite Abschnitt des Sitzelements um eine Schwenkachse zwischen seiner Ruheposition und seiner Nutzungsposition verschwenkbar. Die Schwenkachse ist vorzugsweise im Bereich eines von der Rückenlehne abgewandten vorderen Rands des ersten Abschnitts des Sitzelements angeordnet. Wenn sich der zweite Abschnitt des Sitzelements in seiner Ruheposition befindet, bildet eine von einem Sitzflächenabschnitt des zweiten Abschnitts des Sitzelements abgewandte Unterseite des zweiten Abschnitts des Sitzelements mit einer von einem Sitzflächenabschnitt des ersten Abschnitts des Sitzelements abgewandten Unterseite des ersten Abschnitts des Sitzelements insbesondere einen Winkel von 45 bis 135°, vorzugsweise einen Winkel von 70 bis 110°, insbesondere bevorzugt einen Winkel von 80 bis 100° und besonders bevorzugt einen Winkel von ca. 90°. Mit anderen Worten, in seiner Ruheposition ist der zweite Abschnitt des Sitzelements vorzugsweise relativ zu dem ersten Abschnitt des Sitzelements nach unten geschwenkt.

Wenn sich der zweite Abschnitt des Sitzelements dagegen in seiner Nutzungsposition befindet, bildet der Sitzflächenabschnitt des zweiten Abschnitts des Sitzelements mit dem Sitzflächenabschnitt des ersten Abschnitts des Sitzelements vorzugsweise einen Winkel von 170 bis 225°, vorzugsweise einen Winkel von 175 bis 205° und insbesondere bevorzugt einen Winkel von ca. 180°. Mit anderen Worten, in seiner Nutzungsposition ist der zweite Abschnitt des Sitzelements derart relativ zu dem ersten Abschnitt des Sitzelements angeordnet, dass die Sitzflächenabschnitte des ersten und des zweiten Abschnitts des Sitzelements im Wesentlichen miteinander fluchten.

Der zweite Abschnitt des Sitzelements ist vorzugsweise durch eine manuelle Betätigung aus seiner Ruheposition in seine Nutzungsposition verschwenkbar. Dies ermöglicht den Verzicht auf mechanische oder elektrische Betätigungseinrichtungen und somit einen einfachen und damit wenig fehleranfälligen Aufbau des Passagiersitzes.

Der Passagiersitz umfasst vorzugsweise ferner einen Vorspannmechanismus, der dazu eingerichtet ist, den zweiten Abschnitt des Sitzelements in seine Ruheposition vorzuspannen. Zusätzliche manuelle Umbaumaßnahmen zur Rückbewegung des zweiten Abschnitts des Sitzelements aus seiner Nutzungsposition in seine Ruheposition können dadurch entfallen, sodass der Passagiersitz besonders rasch und einfach in einen Betriebszustand gebracht werden kann, in dem das Sitzelement einen verringerten Platzbedarf hat und dadurch zusätzlichen Freiraum beispielsweise in einem an den Passagiersitz angrenzenden Quergang schafft. Falls gewünscht, kann der Vorspannmechanismus integriert mit dem Verriegelungsmechanismus ausgebildet sein.

Der Verriegelungsmechanismus des Passagiersitzes umfasst ein mit dem zweiten Abschnitt des Sitzelements verbundenes Halteelement. Das Halteelement ist zwischen einer Halteposition und einer Freigabeposition bewegbar. Wenn das Halteelement in seiner Halteposition angeordnet ist, hält das Halteelement den zweiten Abschnitt des Sitzelements in seiner Nutzungsposition. Wenn es in seiner Freigabeposition angeordnet ist, lässt das Halteelement eine Schwenkbewegung des zweiten Abschnitts des Sitzelements aus seiner Nutzungsposition in seine Ruheposition zu. Um den zweiten Abschnitt des Sitzelements in seiner Nutzungsposition zu verriegeln, ist das Halteelement vorzugsweise in seiner Halteposition blockierbar bzw. verriegelbar.

Das Halteelement kann in Form eines mit dem zweiten Abschnitt des Sitzelements verbundenen und in einem Zylinder zwischen seiner Halteposition und seiner Freigabeposition verschiebbaren Kolbens ausgebildet sein. Insbesondere kann ein freies Ende einer Kolbenstange des Kolbens mit dem zweiten Abschnitt des Sitzelements verbunden sein. Der Zylinder kann beispielsweise in Form eines hydraulischen oder pneumatischen Zylinders ausgebildet sein und eine durch eine Kolbenfläche des Kolbens begrenzte und ein hydraulisches oder pneumatisches Fluid enthaltende Fluidkammer umfassen. Solange ein ungehinderter Fluidfluss in die Fluidkammer und aus der Fluidkammer möglich ist, ist der Kolben frei in dem Zylinder verschiebbar. Dementsprechend ist dann auch der zweite Abschnitt des Sitzelements, frei zwischen seiner Ruheposition und seiner Nutzungsposition bewegbar.

Beispielsweise kann die Fluidkammer durch mindestens eine hydraulische oder pneumatische Leitung mit einem von der Kolbenfläche des Kolbens abgewandten Bereich des Zylinders verbunden sein. Solange ein ungehinderter Fluidfluss durch diese Leitung möglich ist, ist der Kolben dann frei in dem Zylinder verschiebbar und der zweite Abschnitt des Sitzelements frei zwischen seiner Ruheposition und seiner Nutzungsposition bewegbar. Wenn dagegen der Fluidfluss aus der Fluidkammer unterbunden wird, ist der Kolben nicht länger in dem Zylinder in Richtung der Fluidkammer verschiebbar ist. Dadurch kann ein in Form eines Kolbens einer Kolben/Zylinderanordnung ausgebildetes Halteelement den zweiten Abschnitt des Sitzelements in seiner Nutzungsposition verriegeln.

Der Verriegelungsmechanismus kann ferner ein erstes Ventil umfassen, das zwischen einer geöffneten Stellung, in der das erste Ventil eine Bewegung des Halteelements aus seiner Halteposition in seine Freigabeposition zulässt, und einer Schließstellung, in der das erste Ventil eine Bewegung des Halteelements aus seiner Halteposition in seine Freigabeposition unterbindet, verstellbar ist. Vorzugsweise ist das erste Ventil in einer ersten hydraulischen oder pneumatischen Leitung angeordnet, die die Fluidkammer des Zylinders mit einem von der Kolbenfläche des Kolbens abgewandten Bereich des Zylinders verbindet. Durch ein Verschließen des ersten Ventils kann der Fluidfluss durch die erste Leitung unterbunden werden, sodass eine Verschiebung eines in Form eines Kolbens einer Kolben/Zylinderanordnung ausgebildeten Halteelements in Richtung der Fluidkammer nicht länger möglich ist, d. h. eine Bewegung des Halteelements aus seiner Halteposition in seine Freigabeposition unterbunden wird.

Das erste Ventil ist vorzugsweise in seine geöffnete Stellung vorgespannt. Ferner kann das erste Ventil mit einem Betätigungselement ausgestattet sein, das dazu eingerichtet ist, durch eine auf das Sitzelement wirkende Gewichtskraft eines auf dem Passagiersitz sitzenden Benutzers aktiviert zu werden, um das erste Ventil in seine Schließstellung zu bewegen. Das Betätigungselement ist vorzugsweise in einen nicht aktivierten Zustand vorgespannt. Dadurch wird sichergestellt, dass das erste Ventil in seiner geöffneten Stellung verbleibt, solange auf das Sitzelement keine Gewichtskraft wirkt, d. h. kein Benutzer auf dem Passagiersitz sitzt. Wenn dagegen das Betätigungselement entgegen der auf das Betätigungselement wirkenden Vorspannkraft durch die Gewichtskraft eines auf dem Passagiersitz sitzenden Benutzers aktiviert wird, wird das erste Ventil in seine Schließstellung bewegt, ohne dass hierzu eine weitere manuelle Betätigung seitens des Benutzers erforderlich ist.

Um eine Umsetzung der Gewichtskraft eines auf dem Passagiersitz sitzenden Benutzers in eine Aktivierung des Betätigungselements und folglich eine Bewegung des ersten Ventils in seine Schließstellung zu ermöglichen, kann das Betätigungselement beispielsweise mit einem das Sitzelement tragenden und demzufolge mit einer auf das Sitzelement wirkenden Gewichtskraft belasteten Sitzelementträger und/oder dem Sitzelement selbst verbunden sein. Der Sitzelementträger kann beispielsweise an einer Unterkonstruktion befestigbar sein, die ihrerseits in einer in einem Boden einer Passagierkabine eines Verkehrsmittels vorgesehenen Sitzschiene befestigbar ist. Insbesondere kann das Betätigungselement in Form eines Betätigungsstifts ausgeführt sein, der in seine aktivierte Stellung gedrückt wird, sobald das Sitzelement mit der Gewichtskraft eines Benutzers des Passagiersitzes belastet wird.

Der Verriegelungsmechanismus kann ferner ein Rückschlagventil umfassen, das eine Bewegung des Halteelements aus seiner Freigabeposition in seine Halteposition zulässt, aber eine Bewegung des Halteelements aus seiner Halteposition in seine Freigabeposition unterbindet. Das Rückschlagventil kann beispielsweise in einer parallel zu der ersten hydraulischen oder pneumatischen Leitung verlaufenden zweiten hydraulischen oder pneumatischen Leitung angeordnet sein und dazu eingerichtet sein, einen Fluidfluss aus einem von der Kolbenfläche eines in Form eines Kolbens ausgebildeten Halteelements abgewandten Bereich des Zylinders in die in dem Zylinder ausgebildete Fluidkammer zuzulassen, einen Fluidfluss aus der Fluidkammer in den von der Kolbenfläche abgewandten Bereich des Zylinders jedoch zu unterbinden.

Bei einer derartigen Ausgestaltung des Verriegelungsmechanismus ist selbst dann, wenn eine Gewichtskraft eines auf dem Passagiersitz sitzenden Benutzers auf das Sitzelement wirkt und demzufolge das in der ersten hydraulischen oder pneumatischen Leitung angeordnete erste Ventil geschlossen ist, noch eine Verschiebung des Kolbens in dem Zylinder entgegen der Fluidkammer möglich. Dementsprechend kann der zweite Abschnitt des Sitzelements durch den bereits sitzenden Benutzer aus seiner Ruheposition in seine Nutzungsposition verschwenkt werden, eine Rückbewegung des zweiten Abschnitts des Sitzelements aus seiner Nutzungsposition in seine Ruheposition ist jedoch nicht mehr möglich, da das Rückschlagventil die Rückströmung von Fluid aus der Fluidkammer in den von der Kolbenfläche abgewandten Bereich des Zylinders unterbindet.

In einer bevorzugten Ausführungsform umfasst der Passagiersitz ferner einen Entriegelungsmechanismus, der dazu eingerichtet ist, eine Schwenkbewegung des zweiten Abschnitts des Sitzelements aus seiner Nutzungsposition in seine Ruheposition zuzulassen, obwohl eine Gewichtskraft eines auf dem Passagiersitz sitzenden Benutzers auf das Sitzelement wirkt. Der Entriegelungsmechanismus ermöglicht es einem auf dem Passagiersitz sitzenden Benutzer, den zweiten Abschnitt des Sitzelements aus seiner Nutzungsposition in Richtung seiner Ruheposition oder vollständig in seine Ruheposition zu verschwenken. Dadurch kann der Benutzer beispielsweise eine von ihm eingestellte, ihm aber unbequem werdende Position des zweiten Abschnitts des Sitzelements korrigieren, ohne von dem Passagiersitz aufzustehen. Dies erhöht den Komfort des Benutzers.

Vorzugsweise umfasst der Entriegelungsmechanismus einen manuell betätigbaren Aktivierungsschalter. Ferner ist der Entriegelungsmechanismus vorzugsweise dazu eingerichtet, eine Schwenkbewegung des zweiten Abschnitts des Sitzelements aus seiner Nutzungsposition in seine Ruheposition nur zuzulassen, wenn der Aktivierungsschalter betätigt ist. Durch die Ausstattung des Entriegelungsmechanismus mit einem Aktivierungsschalter ist der Entriegelungsmechanismus derart ausgeführt, dass er den zweiten Abschnitt des Sitzelements nur dann entriegelt, wenn der Aktivierungsschalter betätigt ist.

Der Aktivierungsschalter ist vorzugsweise, beispielsweise mithilfe einer Feder, in eine nicht aktivierte Stellung vorgespannt, um sicherzustellen, dass der Aktivierungsschalter durch einen Benutzer des Passagiersitzes aktiv manuell betätigt werden muss, um den Entriegelungsmechanismus zu aktivieren. Der Aktivierungsschalter kann im Bereich einer Armlehne des Passagiersitzes angeordnet sein. Der Aktivierungsschalter ist dann für einen Benutzer des Passagiersitzes leicht und komfortabel zugänglich.

Der Entriegelungsmechanismus kann ein zweites Ventil umfassen, das zwischen einer Schließstellung, in der das zweite Ventil eine Bewegung des Halteelements aus seiner Halteposition in seine Freigabeposition unterbindet, und einer geöffneten Stellung, in der das zweite Ventil eine Bewegung des Halteelements aus seiner Halteposition in seine Freigabeposition zulässt, verstellbar ist. Vorzugsweise ist das zweite Ventil in einer dritten hydraulischen oder pneumatischen Leitung angeordnet, die die Fluidkammer des Zylinders mit einem von der Kolbenfläche des Kolbens abgewandten Bereich des Zylinders verbindet. Die dritte hydraulische oder pneumatische Leitung kann parallel zu der ersten und/oder der zweiten hydraulischen oder pneumatischen Leitung verlaufen. Ferner ist das zweite Ventil vorzugsweise in seine Schließstellung vorgespannt.

Durch ein Öffnen des zweiten Ventils wird ein Fluidfluss durch die dritte Leitung ermöglicht, sodass das in Form eines Kolbens ausgebildete Halteelement in dem Zylinder in Richtung der Fluidkammer bewegt kann, selbst wenn der Fluidfluss durch die erste Leitung durch das geschlossene erste Ventil und der Fluidfluss durch die zweite Leitung durch das Rückschlagventil unterbunden ist. Infolgedessen wird eine Schwenkbewegung des zweiten Abschnitts des Sitzelements aus seiner Nutzungsposition in Richtung seiner Ruheposition durch einen auf dem Passagiersitz sitzenden Benutzer ermöglicht.

Der Aktivierungsschalter des Entriegelungsmechanismus ist vorzugsweise dazu eingerichtet, das zweite Ventil in seine geöffnete Stellung zu bewegen. Beispielsweise kann der Aktivierungsschalter in Form eines Aktivierungsstifts oder eines anderen geeigneten mechanischen Aktivierungsmechanismus, wie z.B. eines Seilzugmechanismus oder dergleichen ausgeführt sein, der durch einen Benutzer des Passagiersitzes manuell in seine aktivierte Stellung gebracht werden kann, wenn seitens des Benutzers eine Aktivierung des Entriegelungsmechanismus gewünscht ist.

Ein durchströmbarer Querschnitt des ersten Ventils und/oder des Rückschlagventils ist vorzugsweise größer als ein durchströmbarer Querschnitt des zweiten Ventils. Ferner kann ein durchströmbarer Querschnitt einer ersten Leitung, in der das erste Ventil angeordnet ist, und/oder ein durchströmbarer Querschnitt einer zweiten Leitung, in der das Rückschlagventil angeordnet ist, größer sein als ein durchströmbarer Querschnitt einer dritten Leitung, in der das zweite Ventil angeordnet ist. Wenn das erste Ventil, das Rückschlagventil, die erste Leitung und die zweite Leitung einen großen durchströmbaren Querschnitt haben, ist eine leichtgängige Bewegung des zweiten Abschnitts des Sitzelements aus seiner Ruheposition in seine Nutzungsposition durch manuelle Betätigung durch den Nutzer des Passagiersitzes möglich. Dies erleichtert die Bedienung des Passagiersitzes.

Im Gegensatz dazu gewährleistet ein kleinerer durchströmbarer Querschnitt des zweiten Ventils und der dritten Leitung, dass die manuelle Bewegung des zweiten Abschnitts des Sitzelements aus seiner Nutzungsposition in seine Ruheposition zwar schwergängiger ist als die manuelle Bewegung des zweiten Abschnitts des Sitzelements aus seiner Ruheposition in seine Nutzungsposition. Die Bewegung ist aber für einen Nutzer des Passagiersitzes besser dosierbar. Dementsprechend wird eine Feineinstellung der Position des zweiten Abschnitts des Sitzelements ermöglicht.

Anstelle des hier beschriebenen hydraulischen oder pneumatischen Systems mit einer Kolben/Zylinderanordnung kann der Passagiersitz auch einen mechanisch oder elektrisch realisierten Verriegelungsmechanismus und/oder Entriegelungsmechanismus aufweisen.

Ein Passagierkabinenbereich umfasst einen Hauptgang, der sich im Wesentlichen parallel zu einer Längsachse des Passagierkabinenbereichs erstreckt. Ferner umfasst der Passagierkabinenbereich einen Ausgang sowie einen von dem Hauptgang abzweigenden Quergang. Mindestens ein oben beschriebener Passagiersitz ist in dem Passagierkabinenbereich derart angrenzend an den Quergang angeordnet, dass das Sitzelement des Passagiersitzes dem Quergang zugewandt ist. In einem derartigen Passagierkabinenbereich kann der Quergang verbreitert werden, indem der Vergrö-ßerungsmechanismus deaktiviert wird, so dass die Tiefe der für den Benutzer nutzbaren Sitzfläche des Sitzelements des Passagiersitzes lediglich der Ruhepositionstiefe entspricht.

Bei dem Quergang kann es sich um einen zwischen hintereinander angeordneten Passagiersitzreihen verlaufenden Quergang handeln. Der Passagiersitz kann dann beispielsweise in vorteilhafter Weise als benachbart zu dem Hauptgang platzierter "Gangsitz" in dem Passagierkabinenbereich installiert sein, um den Zugang zu seitlich von dem Passagiersitz als "Mittelsitz" und/oder "Fenstersitz" installierten Passagiersitzen über den Quergang zu erleichtern. In einer besonders bevorzugten Ausführungsform des Passagierkabinenbereichs verbindet der Quergang den Hauptgang mit einem Ausgang, insbesondere einem Notausgang des Passagierkabinenbereichs.

Der oben beschriebene Passagiersitz und/oder der oben beschriebene Passagierkabinenbereich ist/sind insbesondere zur Verwendung in einem Flugzeug geeignet. Bei dem Passagierkabinenbereich kann es sich insbesondere um einen Flugzeugpassagierkabinenbereich mit einem Quergang handeln, der den Hauptgang mit einem sich oberhalb eines Flügels befindlichen Notausgang verbindet und bei dem eine vorgegebene Quergangbreite von 13 Zoll zu gewährleisten ist.

Bevorzugte Ausführungsformen der Erfindung werden nun anhand der beigefügten schematischen Zeichnungen näher erläutert, von denen
- Figur 1: einen Passagierkabinenbereich zeigt, in dem eine Mehrzahl von Passagiersitzen angeordnet ist,
- Figur 2: eine Seitenansicht eines zur Installation in dem Passagierkabinenbereich gemäß Figur 1 geeigneten Passagiersitzes mit einem Sitzelement zeigt, das einen ersten Abschnitt und einen relativ zu dem ersten Abschnitt zwischen einer Ruheposition und einer Nutzungsposition verschwenkbaren zweiten Abschnitt umfasst,
- Figur 3: eine Passagiersitzreihe mit drei nebeneinander angeordneten Passagiersitzen gemäß Figur 2 zeigt,
- Figur 4: ein beispielhaftes hydraulisches System zeigt, das einen Verriegelungsmechanismus sowie einen Entriegelungsmechanismus des Passagiersitzes gemäß Figur 2 bildet, wobei der Verriegelungsmechanismus und der Entriegelungsmechanismus deaktiviert sind,
- Figur 5: das hydraulische System gemäß Figur 4 zeigt, wobei der Verriegelungsmechanismus aktiviert und der Entriegelungsmechanismus deaktiviert ist, und
- Figur 6: das hydraulische System gemäß Figur 4 zeigt, wobei der Verriegelungsmechanismus und der Entriegelungsmechanismus aktiviert sind.

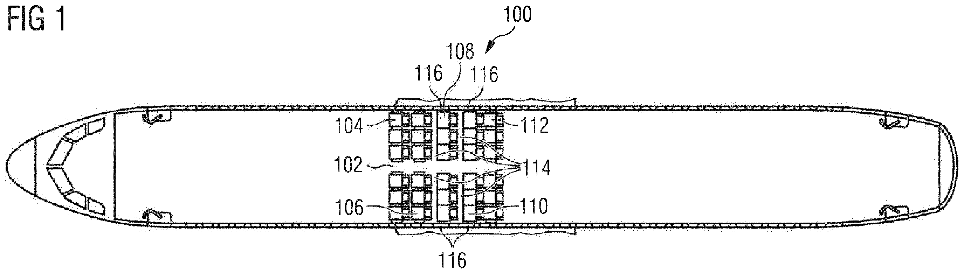

Figur 1 zeigt einen Passagierkabinenbereich 100, der in dem hier gezeigten Ausführungsbeispiel einen Teil einer Flugzeugpassagierkabine bildet. Der Passagierkabinenbereich 100 umfasst einen Hauptgang 102, der sich im Wesentlichen parallel zu einer Längsachse L des Passagierkabinenbereichs 100 erstreckt. In dem Passagierkabinenbereich 100 sind mehrere Passagiersitzreihen 104, 106, 108, 110, 112 installiert. Zwischen den Passagiersitzreihen 106 und 108 und den Passagiersitzreihen 108 und 110 sind jeweils Quergänge 114 vorgesehen, die den Hauptgang 102 mit Notausgängen 116 verbinden. In dem in Figur 1 gezeigten Ausführungsbeispiel eines Flugzeugpassagierkabinenbereichs 100 sind die Notausgänge 116 über den Flügeln des Flugzeugs platziert.

Die Quergänge 114 müssen eine vorgegebene Breite aufweisen, um im Fall einer Notevakuierung der Flugzeugpassagierkabine einen ausreichenden Passagierstrom durch die Quergänge 114 zu den Notausgänge 116 gewährleisten zu können. Bei der Anordnung gemäß Figur 1 ist aus diesem Grund der Abstand zwischen hintereinander angeordneten Passagiersitzen der Passagiersitzreihen 106 und 108 sowie hintereinander angeordneten Passagiersitzen der Passagiersitzreihen 108 und 110 jeweils größer als der Abstand zwischen hintereinander angeordneten Passagiersitzen der Passagiersitzreihen 104 und 106 und hintereinander angeordneten Passagiersitzen der Passagiersitzreihen 110 und 112.

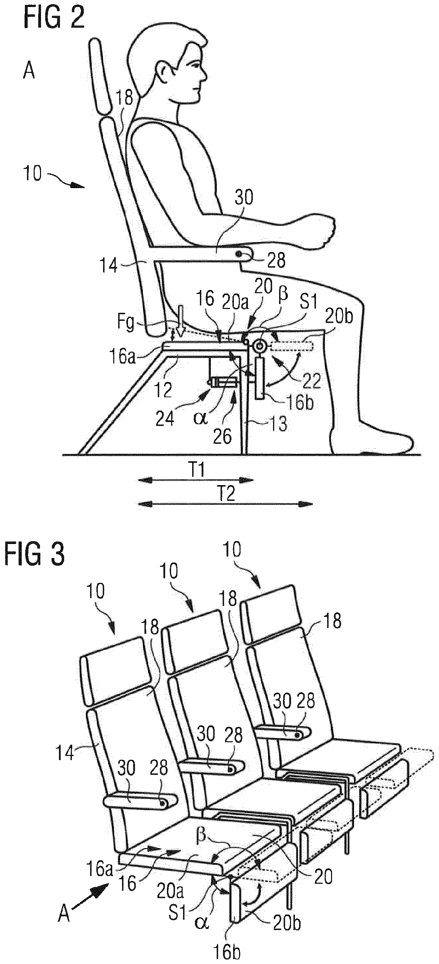

Zur Installation in den Passagiersitzreihen 106 und 108 des in Figur 1 gezeigten Passagierkabinenbereichs 100 geeignete Passagiersitze 10 sind in den Figuren 2 und 3 veranschaulicht. Zusätzlich oder alternativ dazu sind die in den Figuren 2 und 3 gezeigten Passagiersitze 10 auch zur Installation in den Passagiersitzreihen 104, 110 und 112 als "Gangsitze" benachbart zu dem Hauptgang 102 und/oder als "Mittelsitze" geeignet, um, wie nachfolgend noch näher erläutert wird, den Zugang zu den "Fenstersitzen" zu erleichtern.

Der Passagiersitz 10 umfasst einen Sitzelementträger 12, der an einer in den Figuren nicht gezeigten Sitzunterkonstruktion 13 befestigt ist. Die Sitzunterkonstruktion 13 ist ihrerseits in einer Sitzschiene befestigbar, die in einen Boden des Passagierkabinenbereichs 100 integriert sein kann. Ferner umfasst der Passagiersitz 10 eine Rückenlehne 14 sowie ein Sitzelement 16. Die Rückenlehne 14 ist relativ zu dem Sitzelement 16 zwischen einer aufrechten Position und einer zurückgelehnten Position verschwenkbar. Wenn sich die Rückenlehne 14 in ihrer aufrechten Position befindet, erstreckt sich eine Rückenlehnenfläche 18 der Rückenlehne 14 im Wesentlichen senkrecht zu einer Sitzfläche 20 des Sitzelements 16. Im Gegensatz dazu bildet die Rückenlehnenfläche 18 der Rückenlehne 14 mit der Sitzfläche 20 des Sitzelements 16 einen Winkel größer 90°, wenn sich die Rückenlehne 14 in ihrer zurückgelehnten Position befindet. Falls gewünscht, kann die Rückenlehne 14 jedoch auch starr, d.h. nicht relativ zu dem Sitzelement 16 verschwenkbar ausgeführt sein.

Das Sitzelement 16 des Passagiersitzes 10 umfasst einen an die Rückenlehne 14 angrenzenden ersten Abschnitt 16a und zweiten Abschnitt 16b, der relativ zu dem ersten Abschnitt 16a um eine Schwenkachse S1, die im Bereich eines von der Rückenlehne 14 abgewandten vorderen Rands des ersten Abschnitts 16a des Sitzelements 16 angeordnet ist, zwischen einer Ruheposition (in den Figuren 2 und 3 durch durchgezogene Linien veranschaulicht) und einer Nutzungsposition (in den Figuren 2 und 3 durch gestrichelte Linien veranschaulicht) verschwenkbar ist. Wenn sich der zweite Abschnitt 16b des Sitzelements 16 in seiner in den Figuren 2 und 3 durch die durchgezogenen Linien veranschaulichten Ruheposition befindet, bildet bei dem in den Figuren gezeigten Ausführungsbeispiel eines Passagiersitzes 10 eine von einem Sitzflächenabschnitt 20b des zweiten Abschnitts 16b des Sitzelements 16 abgewandte Unterseite des zweiten Abschnitts 16b des Sitzelements 16 mit einer von einem Sitzflächenabschnitt 20a des ersten Abschnitts 16a des Sitzelements 16 abgewandten Unterseite des ersten Abschnitts 16a des Sitzelements 16 einen Winkel α von ca. 90°.

Im Gegensatz dazu bildet dann, wenn sich der zweite Abschnitt 16b des Sitzelements 16 in seiner in den Figuren 2 und 3 durch die gestrichelten Linien veranschaulichten Nutzungsposition befindet, der Sitzflächenabschnitt 20b des zweiten Abschnitts 16b des Sitzelements 16 mit dem Sitzflächenabschnitt 20a des ersten Abschnitts 16a des Sitzelements 16 einen Winkel β von ca. 180°. Mit anderen Worten, in der Nutzungsposition des zweiten Abschnitts 16b des Sitzelements 16 fluchtet der Sitzflächenabschnitt 20b des zweiten Abschnitts 16b des Sitzelements 16 mit dem Sitzflächenabschnitt 20a des ersten Abschnitts 16a, sodass der zweite Abschnitt 16b des Sitzelements 16 eine Tiefe T einer für den Benutzer nutzbaren Sitzfläche 20 des Sitzelements 16 von einer Tiefe T1 auf eine Tiefe T2 vergrößert.

Ein Vorspannmechanismus 22, der beispielsweise eine im Bereich der Schwenkachse S1 vorgesehene Feder umfassen kann, spannt den zweiten Abschnitt 16b des Sitzelements 16 in seiner Ruheposition vor. Der zweite Abschnitt 16b des Sitzelements 16 ist jedoch durch eine manuelle Betätigung durch einen Nutzer des Passagiersitzes 10 entgegen der von dem Vorspannmechanismus 22 auf den zweiten Abschnitt 16b des Sitzelements 16 aufgebrachten Vorspannkraft aus seiner Ruheposition in seine Nutzungsposition verschwenkbar.

Darüber hinaus umfasst der Passagiersitz 10 einen Verriegelungsmechanismus 24, der eine Schwenkbewegung des zweiten Abschnitts 16b des Sitzelements 16 aus seiner Nutzungsposition in seine Ruheposition unterbindet, wenn eine Gewichtskraft F_{G} eines auf dem Passagiersitz sitzenden Benutzers auf das Sitzelement 16 wirkt. Ferner ist der Verriegelungsmechanismus 24 dazu eingerichtet, bei einem Wegfall der auf das Sitzelement 16 wirkenden Gewichtskraft F_{G} den zweiten Abschnitt 16b des Sitzelement 16 für eine Schwenkbewegung um die Schwenkachse S1 aus seiner Nutzungsposition in seine Ruheposition freizugeben.

Schließlich umfasst der Passagiersitz 10 einen Entriegelungsmechanismus 26, der eine Schwenkbewegung des zweiten Abschnitts 16b des Sitzelements 16 um die Schwenkachse S1 aus seiner Nutzungsposition in seine Ruheposition zulässt, obwohl eine Gewichtskraft F_{G} eines auf dem Passagiersitz 10 sitzenden Benutzers auf das Sitzelement 16 wirkt. Der Entriegelungsmechanismus 26 umfasst einen manuell betätigbaren Aktivierungsschalter 28, der im Bereich einer Armlehne 30 des Passagiersitzes angeordnet ist. Der Entriegelungsmechanismus 26 ist insbesondere so gestaltet, dass er eine Schwenkbewegung des zweiten Abschnitts 16b des Sitzelements 16 aus seiner Nutzungsposition in seine Ruheposition um die Schwenkachse S1 nur zulässt, wenn, d. h. solange der Aktivierungsschalter 28 betätigt ist. Der Aktivierungsschalter 28 ist, beispielsweise mithilfe einer Feder (in den Figuren nicht gezeigt), in eine nicht aktivierte Stellung vorgespannt, um sicherzustellen, dass der Aktivierungsschalter 28 durch einen Benutzer des Passagiersitzes 10 aktiv manuell betätigt werden muss, um den Entriegelungsmechanismus 26 zu aktivieren.

Im Folgenden wird die Funktion des Passagiersitzes 10 erläutert. Wenn der Passagiersitz 10 nicht in Benutzung ist, befindet sich der zweite Abschnitt 16b des Sitzelements 16 in seiner Ruheposition, in der die Sitzfläche 20 des Sitzelements 16 lediglich die verringerte Tiefe T1 aufweist. Dementsprechend hat das Sitzelement 16 in einer Richtung senkrecht zu der Rückenlehnenfläche 18 der Rückenlehne 14 nach vorne einen geringen Platzbedarf, wodurch im unbenutzten Zustand des Passagiersitzes 10 der Abstand zwischen dem vorderen Rand des Sitzelements 16 und einem vor dem Passagiersitz 10 befindlichen Vordersitz vergrößert werden kann. Durch den Vorspannmechanismus 22 wird der zweite Abschnitt 16b des Sitzelements 16 in seiner Ruheposition gehalten, wodurch einer unbeabsichtigten Bewegung des zweiten Abschnitts 16b des Sitzelements 16 aus seiner Ruheposition in seine Nutzungsposition entgegengewirkt wird.

Wenn ein Benutzer auf dem Passagiersitz 10 Platz nehmen möchte, setzt er sich auf das Sitzelement 16 und klappt den zweiten Abschnitt 16b des Sitzelements 16 manuell nach oben in seine Nutzungsposition, bis der Sitzflächenabschnitt 20b des zweiten Abschnitts 16b des Sitzelements 16 mit dem Sitzflächenabschnitt 20a des ersten Abschnitts 16a des Sitzelements 16 fluchtet. Dadurch vergrößert sich die Tiefe der Gesamtsitzfläche 20 des Sitzelements 16 auf die Tiefe T2, die ein bequemes Sitzen ermöglicht. Solange der Benutzer auf dem Passagiersitz 10 sitzt und die Gewichtskraft F_{G} des Benutzers auf das Sitzelement 16 wirkt, verhindert der Verriegelungsmechanismus 24, dass der zweite Abschnitt 16b des Sitzelements 16 aus seiner Nutzungsposition in seine Ruheposition bewegt wird. Eine aktive Betätigung des Verriegelungsmechanismus 24 durch den Benutzer ist hierfür nicht erforderlich.

Wenn der Benutzer des Passagiersitzes 10 die Position des zweiten Abschnitts 16b Sitzelements 16 verändern möchte, d. h. den zweiten Abschnitt 16b des Sitzelements 16 aus seiner Nutzungsposition in Richtung seiner Ruheposition bewegen möchte, beispielsweise um eine von ihm eingestellte, ihm aber unbequem werdende Position des zweiten Abschnitts 16b des Sitzelements 16 zu korrigieren, kann er den im Bereich der Armlehne 30 angeordneten Aktivierungsschalter 28 betätigen. Dadurch wird der Entriegelungsmechanismus 26 aktiviert, der ist dem auf dem Passagiersitz 10 sitzenden Benutzer ermöglicht, den zweiten Abschnitt 16b des Sitzelements 16 aus seiner Nutzungsposition in Richtung seiner Ruheposition oder vollständig in seine Ruheposition zu verschwenken, ohne von dem Passagiersitz 10 aufzustehen. Sobald der Benutzer den Aktivierungsschalter 28 loslässt, wird Entriegelungsmechanismus 26 aber wieder deaktiviert, sodass eine unbeabsichtigte Entriegelung des zweiten Abschnitts 16b des Sitzelements 16 unterbunden wird.

Wenn der Benutzer schließlich von dem Passagiersitz 10 aufsteht und folglich die Gewichtskraft F_{G} nicht länger auf das Sitzelement 16 wirkt, wird der Verriegelungsmechanismus 24 automatisch entriegelt, ohne dass hierfür eine aktive Maßnahme des Benutzers erforderlich ist. Der Vorspannmechanismus 22 sorgt dann dafür, dass der zweite Abschnitt 16b des Sitzelements 16 automatisch in seine Ruheposition zurückgeschwenkt wird.

Wenn der Passagiersitz 10 in dem Passagierkabinenbereich 100 in den Passagiersitzreihen 106 und 108 angrenzend an die Quergänge 114 so installiert ist, dass das Sitzelement 16 des Passagiersitzes 10 dem jeweiligen Quergang 114 zugewandt ist, kann durch das Verschwenken des zweiten Abschnitts 16b Sitzelements 16 aus seiner Nutzungsposition in seine Ruheposition der Abstand zwischen dem vorderen Rand des Sitzelements 16 und einem vor dem Passagiersitz 10 befindlichen weiteren Passagiersitz vergrößert werden. Im Normalbetrieb eines mit dem Passagierkabinenbereich 100 ausgestatteten Flugzeugs kann der Passagiersitz 10 mit in seiner Nutzungsposition angeordnetem zweiten Abschnitt 16b des Sitzelements 16 in üblicher Weise und ohne Komforteinbußen für einen auf dem Passagiersitz 10 sitzenden Passagier genutzt werden. Wenn dagegen Passagiere durch den Quergang 114 zu dem Ausgang 116 gelangen müssen, kann der zweite Abschnitt 16b in seine Ruheposition verschwenkt werden, wodurch der Quergang 114 verbreitert werden kann.

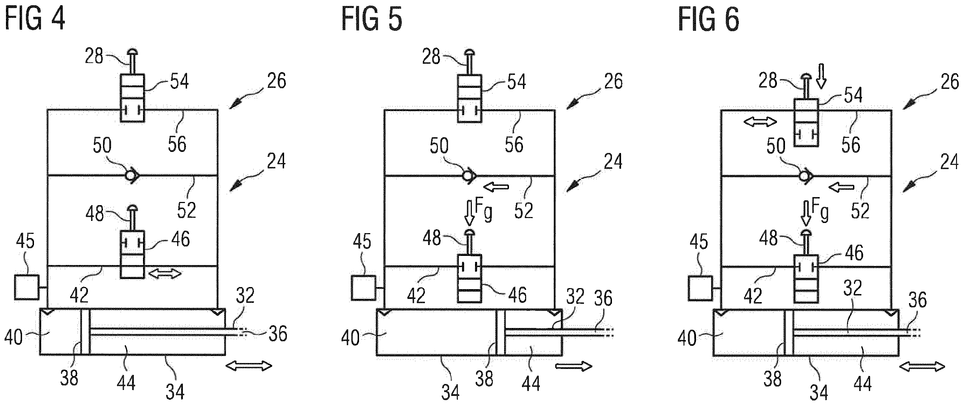

Der Aufbau und die Funktionsweise des Verriegelungsmechanismus 24 und des Entriegelungsmechanismus 26 werden nun mit Bezugnahme auf die Figuren 4 bis 6 näher erläutert. Insbesondere umfasst der Verriegelungsmechanismus 24 ein Halteelement 32, das mit dem zweiten Abschnitt 16b des Sitzelements 16 verbunden ist. Das Halteelement 32 ist zwischen einer Halteposition und einer Freigabeposition bewegbar. Wenn das Halteelement 32 in seiner Halteposition angeordnet ist, hält das Halteelement 32 den zweiten Abschnitt 16b des Sitzelements 16 in seiner Nutzungsposition. Wenn es in seiner Freigabeposition angeordnet ist, lässt das Halteelement 32 dagegen eine Schwenkbewegung des zweiten Abschnitts 16b des Sitzelements 16 um die Schwenkachse S1 aus seiner Nutzungsposition in seine Ruheposition zu. Um den zweiten Abschnitt 16b des Sitzelements 16 in seiner Nutzungsposition zu verriegeln, ist das Halteelement 32 in seiner Halteposition blockierbar bzw. verriegelbar.

In den Figuren 4 bis 6 ist eine Ausgestaltung des Verriegelungsmechanismus 24 und des Entriegelungsmechanismus 26 in Form eines hydraulischen Systems veranschaulicht. Alternativ dazu können der Verriegelungsmechanismus 24 und der Entriegelungsmechanismus 26 aber auch in Form eines pneumatischen Systems, in Form eines mechanischen Systems oder in Form eines elektrisch angetriebenen Systems realisiert sein.

Bei dem in den Figuren 4 bis 6 veranschaulichten System ist das Halteelement 32 in Form eines Kolbens ausgebildet, der mit dem zweiten Abschnitt 16b des Sitzelements 16 verbunden und in einem Zylinder 34 zwischen einer Halteposition und einer Freigabeposition verschiebbar ist. Insbesondere ist ein freies Ende einer Kolbenstange 36 des in Form eines Kolbens ausgebildeten Halteelements 32 mit dem zweiten Abschnitt 16b des Sitzelements 16 verbunden. Der Zylinder 34 ist dagegen in Form eines hydraulischen Zylinders 34 ausgebildet und umfasst eine durch eine Kolbenfläche 38 des in Form eines Kolbens ausgebildeten Halteelements 32 begrenzte und ein hydraulisches Fluid enthaltende Fluidkkammer 40.

Solange ein ungehinderter Fluidfluss in die Fluidkammer 40 und aus der Fluidkammer 40 möglich ist, ist das Halteelement 32, wie in Figur 4 gezeigt, frei in dem Zylinder 34 verschiebbar. Dementsprechend ist dann auch der zweite Abschnitt 16b des Sitzelements 16, frei zwischen seiner Ruheposition und seiner Nutzungsposition bewegbar. Wenn dagegen, wie in Figur 5 veranschaulicht, der Abfluss von Fluid aus der Fluidkammer 40 unterbrochen wird, ist eine Verschiebung des in Form eines Kolbens ausgebildeten Halteelements 32 in dem Zylinder 34 in Richtung der Fluidkammer 40 nicht mehr möglich. Dadurch hält das Halteelement 32 den zweiten Abschnitt 16b des Sitzelements 16 entgegen der von dem Vorspannmechanismus 22 auf den zweiten Abschnitt 16b des Sitzelements 16 aufgebrachten Federkraft und auch gegen eine eventuelle zusätzliche Kraft, die beispielsweise durch einen auf dem Passagiersitz 10 sitzenden Passagier auf den zweiten Abschnitt 16b des Sitzelements 16 aufgebracht wird, in seiner Nutzungsposition. Dementsprechend kann das in Form eines Kolbens ausgebildete Halteelement 32 dann den zweiten Abschnitt 16b des Sitzelements 16 in seiner Nutzungsposition verriegeln.

Die Fluidkammer 40 ist durch eine erste hydraulische Leitung 42 mit einem von der Kolbenfläche 38 des in Form eines Kolbens ausgebildeten Halteelements 32 abgewandten Bereich 44 des Zylinders 34 verbunden. Solange ein ungehinderter Fluidfluss durch die erste hydraulische Leitung 42 möglich ist, ist ein ungehinderter Fluidfluss in die Fluidkammer 40 und aus der Fluidkammer 40 möglich und das Halteelement 32 frei in dem Zylinder 34 verschiebbar. Dementsprechend ist dann auch der zweite Abschnitt 16b des Sitzelements 16 frei zwischen seiner Ruheposition und seiner Nutzungsposition bewegbar. Ein mit der ersten hydraulischen Leitung 42 verbundener Ausgleichsbehälter 45 dient dem Ausgleich von Temperatur- und Druckschwankungen.

Der Verriegelungsmechanismus 24 umfasst ferner ein in der ersten hydraulischen Leitung 42 angeordnetes erstes Ventil 46, das zwischen einer in Figur 4 gezeigten geöffneten Stellung, in der das erste Ventil 46 eine Bewegung des Halteelements 32 aus seiner Halteposition in seine Freigabeposition zulässt, und einer in Figur 5 veranschaulichten Schließstellung, in der das erste Ventil 46 eine Bewegung des Halteelements 32 aus seiner Halteposition in seine Freigabeposition unterbindet, verstellbar ist. Durch ein Verschließen des ersten Ventils 46 kann der Fluidfluss durch die erste hydraulische Leitung 42 unterbrochen werden, sodass der Fluidfluss aus der Fluidkammer 40 des Zylinders 34 unterbunden wird und folglich eine Verschiebung eines in Form eines Kolbens ausgebildeten Halteelements 32 in Richtung der Fluidkammer 40, d. h. eine Bewegung des Halteelements 32 aus seiner Halteposition in seine Freigabeposition unterbunden wird.

Das erste Ventil 46 ist in seine geöffnete Stellung vorgespannt. Ferner ist das erste Ventil 46 mit einem Betätigungselement 48 ausgestattet, das durch eine auf das Sitzelement 16 wirkende Gewichtskraft F_{G} eines auf dem Passagiersitz 10 sitzenden Benutzers aktiviert werden kann, um das erste Ventil 46 in seine Schließstellung zu bewegen. Das Betätigungselement 48 ist in einen nicht aktivierten Zustand vorgespannt. Dadurch wird sichergestellt, dass das erste Ventil 46 in seiner in Figur 4 gezeigten geöffneten Stellung verbleibt, solange auf das Sitzelement 16 keine Gewichtskraft F_{G} wirkt, d. h. kein Benutzer auf dem Passagiersitz 10 sitzt. Wenn dagegen das Betätigungselement 48 entgegen der auf das Betätigungselement 48 wirkenden Vorspannkraft durch die Gewichtskraft F_{G} eines auf dem Passagiersitz 10 sitzenden Benutzers aktiviert wird, wird das erste Ventil 46 in seine in Figur 5 veranschaulichte Schließstellung bewegt, ohne dass hierzu eine weitere manuelle Betätigung seitens des Benutzers erforderlich ist.

Um eine Umsetzung der Gewichtskraft F_{G} eines auf dem Passagiersitz 10 sitzenden Benutzers in eine Aktivierung des Betätigungselements 48 und folglich eine Bewegung des ersten Ventils 46 in seine Schließstellung zu ermöglichen, ist das hier in Form eines Betätigungsstifts ausgebildete Betätigungselement 48 mit dem das Sitzelement 16 tragenden und demzufolge mit einer auf das Sitzelement 16 wirkenden Gewichtskraft F_{G} belasteten Sitzelementträger 12 verbunden. Sobald das Sitzelement 16 mit der Gewichtskraft F_{G} eines Benutzers des Passagiersitzes 10 belastet wird, wird das Betätigungselement 48 in seine aktivierte Stellung gedrückt und das erste Ventil 46 geschlossen.

Der Verriegelungsmechanismus 24 umfasst ferner ein Rückschlagventil 50, das eine Bewegung des Halteelements 32 aus seiner Freigabeposition in seine Halteposition zulässt, aber eine Bewegung des Halteelements 32 aus seiner Halteposition in seine Freigabeposition unterbindet. Das Rückschlagventil 50 ist in einer parallel zu der ersten hydraulischen Leitung 42 verlaufenden zweiten hydraulischen Leitung 52 angeordnet sein und lässt einen Fluidfluss aus dem von der Kolbenfläche 38 des in Form eines Kolbens ausgebildeten Halteelements 32 abgewandten Bereich 44 des Zylinders 34 in die in dem Zylinder 34 ausgebildete Fluidkammer 40 zu. Im Gegensatz dazu unterbindet das Rückschlagventil 50 jedoch einen Fluidfluss aus der Fluidkammer 40 in den von der Kolbenfläche 38 abgewandten Bereich 44 des Zylinders 34.

Durch die Ausstattung des Verriegelungsmechanismus 24 mit der zweiten hydraulischen Leitung 52 und dem Rückschlagventil 50 ist selbst dann, wenn eine Gewichtskraft F_{G} eines auf dem Passagiersitz 10 sitzenden Benutzers auf das Sitzelement 16 wirkt und demzufolge das in der ersten hydraulischen Leitung 42 angeordnete erste Ventil 46 geschlossen ist, noch eine Verschiebung des in Form eines Kolbens ausgebildeten Halteelements 32 in dem Zylinder 34 entgegen der Fluidkammer 40 möglich. Dementsprechend kann der zweite Abschnitt 16b des Sitzelements 16 durch den bereits sitzenden Benutzer aus seiner Ruheposition in seine Nutzungsposition verschwenkt werden, eine Rückbewegung des zweiten Abschnitts 16b des Sitzelements 16 aus seiner Nutzungsposition in seine Ruheposition ist jedoch nicht mehr möglich, da das Rückschlagventil 50 die Rückströmung von Fluid aus der Fluidkammer 40 in den von der Kolbenfläche 38 abgewandten Bereich 44 des Zylinders 34 unterbindet.

Der Entriegelungsmechanismus 26 des Passagiersitzes 10 umfasst ein zweites Ventil 54, das zwischen einer in den Figuren 4 und 5 veranschaulichten Schließstellung, in der das zweite Ventil 54 eine Bewegung des in Form eines Kolbens ausgebildeten Halteelements 32 aus seiner Halteposition in seine Freigabeposition unterbindet, und einer in Figur 6 gezeigten geöffneten Stellung, in der das zweite Ventil 54 eine Bewegung des Halteelements 32 aus seiner Halteposition in seine Freigabeposition zulässt, verstellbar ist. Insbesondere wird das zweite Ventil 54 durch eine Betätigung des Aktivierungsschalters 28 des Entriegelungsmechanismus 26 aus seiner Schließstellung in seine geöffnete Stellung überführt und verbleibt dort, solange der Aktivierungsschalter 28 von einem Benutzer des Passagiersitzes 10 betätigt wird.

Das zweite Ventil 54 ist in einer dritten hydraulischen Leitung 56 angeordnet, die parallel zu der ersten und der zweiten Leitung 42, 52 die Fluidkammer 40 des Zylinders 34 mit dem von der Kolbenfläche 38 des in Form eines Kolbens ausgebildeten Halteelements 32 abgewandten Bereich 44 des Zylinders 34 verbindet. Ferner ist das zweite Ventil 54 in seine Schließstellung vorgespannt. Durch ein Öffnen des zweiten Ventils 54 wird ein Fluidfluss durch die dritte hydraulische Leitung 56 ermöglicht, sodass das in Form eines Kolbens ausgebildete Halteelement 32 in dem Zylinder 34 in Richtung der Fluidkammer 40 bewegt kann, selbst wenn der Fluidfluss durch die erste hydraulische Leitung 42 durch das geschlossene erste Ventil 46 und der Fluidfluss durch die zweite hydraulische Leitung 52 durch das Rückschlagventil 50 unterbunden ist. Infolgedessen wird eine Schwenkbewegung des zweiten Abschnitts 16b des Sitzelements 16 aus seiner Nutzungsposition in Richtung seiner Ruheposition durch einen auf dem Passagiersitz 10 sitzenden Benutzer ermöglicht.

## Patentansprüche

1. Passagiersitz (10) mit:
- einer Rückenlehne (14), und
- einem Sitzelement (16), wobei das Sitzelement (16) einen an die Rückenlehne (14) angrenzenden ersten Abschnitt (16a) und einen relativ zu dem ersten Abschnitt (16a) zwischen einer Ruheposition und einer Nutzungsposition verschwenkbaren zweiten Abschnitt (16b) umfasst, wobei der zweite Abschnitt (16b) des Sitzelements (16) in seiner Nutzungsposition eine Tiefe einer für den Benutzer nutzbaren Sitzfläche (20) des Sitzelements (16) vergrößert, und
wobei der Passagiersitz (10) ferner einen Verriegelungsmechanismus (24) umfasst, der dazu eingerichtet ist, eine Schwenkbewegung des zweiten Abschnitts (16b) des Sitzelements (16) aus seiner Nutzungsposition in seine Ruheposition zu unterbinden, wenn eine Gewichtskraft (F_{G}) eines auf dem Passagiersitz (10) sitzenden Benutzers auf das Sitzelement (16) wirkt,
**dadurch gekennzeichnet, dass** der Verriegelungsmechanismus (24) ein mit dem zweiten Abschnitt (16b) des Sitzelements (16) verbundenes Halteelement (32) umfasst, das zwischen einer Halteposition, in der das Halteelement (32) den zweiten Abschnitt (16b) des Sitzelements (16) in seiner Nutzungsposition hält, und einer Freigabeposition, in der das Halteelement (32) eine Schwenkbewegung des zweiten Abschnitts (16b) des Sitzelements (16) aus seiner Nutzungsposition in seine Ruheposition zulässt, bewegbar ist, und dass der Verriegelungsmechanismus (24) dazu eingerichtet ist, bei einem Wegfall der auf das Sitzelement (16) wirkenden Gewichtskraft (F_{G}) den zweiten Abschnitt (16b) des Sitzelement (16) für eine Schwenkbewegung aus seiner Nutzungsposition in seine Ruheposition freizugeben.

2. Passagiersitz nach Anspruch 1, wobei der zweite Abschnitt (16b) des Sitzelements (16) um eine Schwenkachse (S1), die insbesondere im Bereich eines von der Rückenlehne (14) abgewandten vorderen Rands des ersten Abschnitts (16a) des Sitzelements (16) angeordnet ist, relativ zu dem ersten Abschnitt (16a) des Sitzelements (16) zwischen seiner Ruheposition, in der eine von einem Sitzflächenabschnitt (20b) des zweiten Abschnitts (16b) des Sitzelements (16) abgewandte Unterseite des zweiten Abschnitts (16b) des Sitzelements (16) mit einer von einem Sitzflächenabschnitt (20a) des ersten Abschnitts (16a) des Sitzelements (16) abgewandten Unterseite des ersten Abschnitts (16a) des Sitzelements (16) einen Winkel (α) von 45 bis 135°, vorzugsweise einen Winkel (α) von 70 bis 110 ° und insbesondere bevorzugt einen Winkel (α) von 80 bis 100° bildet, und seiner Nutzungsposition, in der der Sitzflächenabschnitt (20b) des zweiten Abschnitts (16b) des Sitzelements (16) mit dem Sitzflächenabschnitt (20a) des ersten Abschnitts (16a) des Sitzelements (16), einen Winkel (β) von 170 bis 225°, vorzugsweise einen Winkel (β) von 175 bis 205° und insbesondere bevorzugt einen Winkel (β) von ca. 180° bildet, verschwenkbar ist.

3. Passagiersitz nach einem der Ansprüche 1 oder 2, wobei der zweite Abschnitt (16b) des Sitzelements (16) durch eine manuelle Betätigung aus seiner Ruheposition in seine Nutzungsposition verschwenkbar ist.

4. Passagiersitz nach einem der Ansprüche 1 bis 3, der ferner einen Vorspannmechanismus (22) umfasst, der dazu eingerichtet ist, den zweiten Abschnitt (16b) des Sitzelements (16) in seine Ruheposition vorzuspannen.

5. Passagiersitz nach einem der Ansprüche 1 bis 4, wobei das Halteelement (32) in Form eines mit dem zweiten Abschnitt (16b) des Sitzelements (16) verbundenen und in einem Zylinder (34) zwischen seiner Halteposition und seiner Freigabeposition verschiebbaren Kolbens ausgebildet ist.

6. Passagiersitz nach einem der Ansprüche 1 bis 5, wobei der Verriegelungsmechanismus (24) ein erstes Ventil (46) umfasst, das zwischen einer geöffneten Stellung, in der das erste Ventil (46) eine Bewegung des Halteelements (32) aus seiner Halteposition in seine Freigabeposition zulässt, und einer Schließstellung, in der das erste Ventil (46) eine Bewegung des Halteelements (32) aus seiner Halteposition in seine Freigabeposition unterbindet, verstellbar ist.

7. Passagiersitz nach Anspruch 6, wobei das erste Ventil (46) ein Betätigungselement (48) umfasst, das dazu eingerichtet ist, durch eine auf das Sitzelement (16) wirkende Gewichtskraft (F_{G}) eines auf dem Passagiersitz (10) sitzenden Benutzers aktiviert zu werden, um das erste Ventil (46) in seine Schließstellung zu bewegen, wobei das Betätigungselement (48) insbesondere mit einem Sitzelementträger (12) und/oder dem ersten Abschnitt (16a) des Sitzelements (16) verbunden und/oder in einen nicht aktivierten Zustand vorgespannt ist.

8. Passagiersitz nach einem der Ansprüche 1 bis 7, wobei der Verriegelungsmechanismus (24) ein Rückschlagventil (50) umfasst, das eine Bewegung des Halteelements (32) aus seiner Freigabeposition in seine Halteposition zulässt, aber eine Bewegung des Halteelements (32) aus seiner Halteposition in seine Freigabeposition unterbindet.

9. Passagiersitz nach einem der Ansprüche 1 bis 8, der ferner einen Entriegelungsmechanismus (26) umfasst, der dazu eingerichtet ist, eine Schwenkbewegung des zweiten Abschnitts (16b) des Sitzelements (16) aus seiner Nutzungsposition in seine Ruheposition zuzulassen, obwohl eine Gewichtskraft (F_{G}) eines auf dem Passagiersitz (10) sitzenden Benutzers auf das Sitzelement (16) wirkt.

10. Passagiersitz nach Anspruch 9, wobei der Entriegelungsmechanismus (26) einen manuell betätigbaren Aktivierungsschalter (28) umfasst und dazu eingerichtet ist, eine Schwenkbewegung des zweiten Abschnitts (16b) des Sitzelements (16) aus seiner Nutzungsposition in seine Ruheposition nur zuzulassen, wenn der Aktivierungsschalter (28) betätigt ist, wobei der Aktivierungsschalter (28) insbesondere im Bereich einer Armlehne (30) des Passagiersitzes (10) angeordnet und/oder in eine nicht aktivierte Stellung vorgespannt ist.

11. Passagiersitz nach einem der Ansprüche 1 bis 8 und Anspruch 9 oder 10, wobei der Entriegelungsmechanismus (26) ein zweites Ventil (54) umfasst, das zwischen einer Schließstellung, in der das zweite Ventil (54) eine Bewegung des Halteelements (32) aus seiner Halteposition in seine Freigabeposition unterbindet, und einer geöffneten Stellung, in der das zweite Ventil (54) eine Bewegung des Halteelements (32) aus seiner Halteposition in seine Freigabeposition zulässt, verstellbar ist.

12. Passagiersitz nach einem der Ansprüche 6 bis 8 und Anspruch 11, wobei ein durchströmbarer Querschnitt des ersten Ventils (46) und/oder des Rückschlagventils (50) größer ist als ein durchströmbarer Querschnitt des zweiten Ventils (54) und/oder wobei ein durchströmbarer Querschnitt einer ersten Leitung (42), in der das erste Ventil (46) angeordnet ist, und/oder ein durchströmbarer Querschnitt einer zweiten Leitung (52), in der das Rückschlagventil (50) angeordnet ist, größer ist als ein durchströmbarer Querschnitt einer dritten Leitung (56), in der das zweite Ventil (54) angeordnet ist.

13. Passagierkabinenbereich (100), der umfasst:
- einen Hauptgang (102), der sich im Wesentlichen parallel zu einer Längsachse (L) des Passagierkabinenbereichs (100) erstreckt,
- einen von dem Hauptgang (102) abzweigenden Quergang (114) und
- mindestens einen Passagiersitz (10) nach einem der Ansprüche 1 bis 12 der in dem Passagierkabinenbereich (100) derart angrenzend an den Quergang (114) angeordnet ist, dass das Sitzelement (16) des Passagiersitzes (10) dem Quergang (114) zugewandt ist.

## Claims

1. Passenger seat (10) having:
- a backrest (14), and
- a seat element (16), wherein the seat element (16) comprises a first portion (16a) adjoining the backrest (14) and a second portion (16b) which can be pivoted relative to the first portion (16a) between an inoperative position and a use position, wherein the second portion (16b) of the seat element (16) in its use position increases a depth of a seat surface (20) of the seat element (16) that can be used by the user, and wherein the passenger seat (10) further comprises a locking mechanism (24) which is configured to prevent a pivoting movement of the second portion (16b) of the seat element (16) from its use position into its inoperative position when a weight (F_{G}) of a user sitting on the passenger seat (10) acts on the seat element (16),
**characterized in that** the locking mechanism (24) comprises a holding element (32) which is connected to the second portion (16b) of the seat element (16) and can be moved between a holding position, in which the holding element (32) holds the second portion (16b) of the seat element (16) in its use position, and a release position, in which the holding element (32) permits a pivoting movement of the second portion (16b) of the seat element (16) from its use position into its inoperative position, and **in that**
the locking mechanism (24) is configured to release the second portion (16b) of the seat element (16) for a pivoting movement from its use position into its inoperative position when the weight (F_{G}) acting on the seat element (16) is removed.

2. Passenger seat according to Claim 1, wherein the second portion (16b) of the seat element (16) can be pivoted about a pivot axis (S1), which is arranged in particular in the region of a front edge, facing away from the backrest (14), of the first portion (16a) of the seat element (16), relative to the first portion (16a) of the seat element (16) between its inoperative position, in which a lower side, facing away from a seat surface portion (20b) of the second portion (16b) of the seat element (16), of the second portion (16b) of the seat element (16) forms an angle (α) of from 45 to 135°, preferably an angle (α) of from 70 to 110°, and particularly preferably an angle (α) of from 80 to 100°, with a lower side, facing away from a seat surface portion (20a) of the first portion (16a) of the seat element (16), of the first portion (16a) of the seat element (16), and its use position, in which the seat surface portion (20b) of the second portion (16b) of the seat element (16) forms an angle (β) of from 170 to 225°, preferably an angle (β) of from 175 to 205°, and particularly preferably an angle (β) of approximately 180°, with the seat surface portion (20a) of the first portion (16a) of the seat element (16).

3. Passenger seat according to either of Claims 1 and 2, wherein the second portion (16b) of the seat element (16) can be pivoted from its inoperative position into its use position by manual actuation.

4. Passenger seat according to one of Claims 1 to 3, which further comprises a pretensioning mechanism (22) which is configured to pretension the second portion (16b) of the seat element (16) into its inoperative position.

5. Passenger seat according to one of Claims 1 to 4, wherein the holding element (32) is in the form of a piston which is connected to the second portion (16b) of the seat element (16) and can be displaced in a cylinder (34) between its holding position and its release position.

6. Passenger seat according to one of Claims 1 to 5, wherein the locking mechanism (24) comprises a first valve (46), which can be adjusted between an open position, in which the first valve (46) permits a movement of the holding element (32) from its holding position into its release position, and a closed position, in which the first valve (46) prevents a movement of the holding element (32) from its holding position into its release position.

7. Passenger seat according to Claim 6, wherein the first valve (46) comprises an actuating element (48) which is configured to be activated by a weight (F_{G}), acting on the seat element (16), of a user sitting on the passenger seat (10) in order to move the first valve (46) into its closed position, wherein the actuating element (48) is connected in particular to a seat element carrier (12) and/or to the first portion (16a) of the seat element (16) and/or is pretensioned into a non-activated state.

8. Passenger seat according to one of Claims 1 to 7, wherein the locking mechanism (24) comprises a non-return valve (50) which permits a movement of the holding element (32) from its release position into its holding position but prevents a movement of the holding element (32) from its holding position into its release position.

9. Passenger seat according to one of Claims 1 to 8, which further comprises an unlocking mechanism (26) configured to permit a pivoting movement of the second portion (16b) of the seat element (16) from its use position into its inoperative position even though a weight (F_{G}) of a user sitting on the passenger seat (10) acts on the seat element (16).

10. Passenger seat according to Claim 9, wherein the unlocking mechanism (26) comprises a manually actuatable activating switch (28) and is configured to permit a pivoting movement of the second portion (16b) of the seat element (16) from its use position into its inoperative position only when the activating switch (28) is actuated, wherein the activating switch (28) is arranged in particular in the region of an armrest (30) of the passenger seat (10) and/or is pretensioned into a non-activated position.

11. Passenger seat according to one of Claims 1 to 8 and Claim 9 or 10, wherein the unlocking mechanism (26) comprises a second valve (54), which can be adjusted between a closed position, in which the second valve (54) prevents a movement of the holding element (32) from its holding position into its release position, and an open position, in which the second valve (54) permits a movement of the holding element (32) from its holding position into its release position.

12. Passenger seat according to one of Claims 6 to 8 and Claim 11, wherein a flow cross section of the first valve (46) and/or of the non-return valve (50) is larger than a flow cross section of the second valve (54), and/or wherein a flow cross section of a first line (42), in which the first valve (46) is arranged, and/or a flow cross section of a second line (52), in which the non-return valve (50) is arranged, is larger than a flow cross section of a third line (56), in which the second valve (54) is arranged.

13. Passenger cabin area (100) which comprises:
- a main aisle (102) which extends substantially parallel to a longitudinal axis (L) of the passenger cabin area (100),
- a transverse aisle (114) branching off from the main aisle (102), and
- at least one passenger seat (10) according to one of Claims 1 to 12 which is arranged in the passenger cabin area (100) adjacent to the transverse aisle (114) in such a manner that the seat element (16) of the passenger seat (10) faces the transverse aisle (114).

## Revendications

1. Siège de passager (10) comportant :
- un dossier (14), et
- un élément de siège (16), l'élément de siège (16) comportant une première partie (16a) adjacente au dossier (14) et une deuxième partie (16b) pouvant pivoter par rapport à la première partie (16a) entre une position de repos et une position d'utilisation, la deuxième partie (16b) de l'élément de siège (16), dans sa position d'utilisation, augmentant une profondeur d'une surface de siège (20) de l'élément de siège (16) pouvant être utilisée par l'utilisateur, et le siège de passager (10) comportant en outre un mécanisme de verrouillage (24), qui est conçu pour empêcher un mouvement de pivotement de la deuxième partie (16b) de l'élément de siège (16) de sa position d'utilisation à sa position de repos, lorsqu'un poids (F_{G}) d'un utilisateur assis sur le siège de passager (10) agit sur l'élément de siège (16),
**caractérisé en ce que** le mécanisme de verrouillage (24) comporte un élément de retenue (32) relié à la deuxième partie (16b) de l'élément de siège (16), lequel élément de retenue est mobile entre une position de retenue, dans laquelle l'élément de retenue (32) retient la deuxième partie (16b) de l'élément de siège (16) dans sa position d'utilisation, et une position de libération, dans laquelle l'élément de retenue (32) autorise un mouvement de pivotement de la deuxième partie (16b) de l'élément de siège (16) de sa position d'utilisation à sa position de repos, et **en ce que** le mécanisme de verrouillage (24) est conçu pour libérer la deuxième partie (16b) de l'élément de siège (16) pour un mouvement de pivotement de sa position d'utilisation à sa position de repos lorsque le poids (F_{G}) agissant sur l'élément de siège (16) est supprimé.

2. Siège de passager selon la revendication 1,
la deuxième partie (16b) de l'élément de siège (16) pouvant pivoter autour d'un axe de pivotement (S1), qui est disposé en particulier dans la région d'un bord avant, opposé au dossier (14), de la première partie (16a) de l'élément de siège (16), par rapport à la première partie (16a) de l'élément de siège (16) entre sa position de repos, dans laquelle un côté inférieur, opposé à une partie de surface de siège (20b) de la deuxième partie (16b) de l'élément de siège (16), de la deuxième partie (16b) de l'élément de siège (16) forme avec un côté inférieur, opposé à une partie de surface de siège (20a) de la première partie (16a) de l'élément de siège (16), de la première partie (16a) de l'élément de siège (16) un angle (α) de 45 à 135°, de préférence un angle (α) de 70 à 110° et en particulier de préférence un angle (α) de 80 à 100°, et sa position d'utilisation, dans laquelle la partie de surface de siège (20b) de la deuxième partie (16b) de l'élément de siège (16) forme avec la partie de surface de siège (20a) de la première partie (16a) de l'élément de siège (16) un angle (β) de 170 à 225°, de préférence un angle (β) de 175 à 205° et en particulier de préférence un angle (β) d'approximativement 180°.

3. Siège de passager selon l'une des revendications 1 ou 2, la deuxième partie (16b) de l'élément de siège (16) pouvant être pivotée par un actionnement manuel de sa position de repos à sa position d'utilisation.

4. Siège de passager selon l'une des revendications 1 à 3, qui comporte en outre un mécanisme de précontrainte (22) qui est conçu pour précontraindre la deuxième partie (16b) de l'élément de siège (16) dans sa position de repos.

5. Siège de passager selon l'une des revendications 1 à 4, l'élément de retenue (32) étant réalisé sous la forme d'un piston relié à la deuxième partie (16b) de l'élément de siège (16) et déplaçable dans un cylindre (34) entre sa position de retenue et sa position de libération.

6. Siège de passager selon l'une des revendications 1 à 5,
le mécanisme de verrouillage (24) comportant une première soupape (46), qui est réglable entre une position ouverte, dans laquelle la première soupape (46) autorise un mouvement de l'élément de retenue (32) de sa position de retenue à sa position de libération, et une position de fermeture, dans laquelle la première soupape (46) empêche un mouvement de l'élément de retenue (32) de sa position de retenue à sa position de libération.

7. Siège de passager selon la revendication 6,
la première soupape (46) comportant un élément d'actionnement (48), qui est conçu pour être activé par un poids (F_{G}), agissant sur l'élément de siège (16), d'un utilisateur assis sur le siège de passager (10), afin de déplacer la première soupape (46) dans sa position de fermeture, l'élément d'actionnement (48) étant en particulier relié à un support d'élément de siège (12) et/ou à la première partie (16a) de l'élément de siège (16) et/ou précontraint dans un état non activé.

8. Siège de passager selon l'une des revendications 1 à 7,
le mécanisme de verrouillage (24) comportant une soupape anti-retour (50), qui autorise un mouvement de l'élément de retenue (32) de sa position de libération à sa position de retenue, mais empêche un mouvement de l'élément de retenue (32) de sa position de retenue à sa position de libération.

9. Siège de passager selon l'une des revendications 1 à 8, qui comporte en outre un mécanisme de déverrouillage (26), qui est conçu pour autoriser un mouvement de pivotement de la deuxième partie (16b) de l'élément de siège (16) de sa position d'utilisation à sa position de repos, même si un poids (F_{G}) d'un utilisateur assis sur le siège de passager (10) agit sur l'élément de siège (16).

10. Siège de passager selon la revendication 9,
le mécanisme de déverrouillage (26) comportant un commutateur d'activation (28) pouvant être actionné manuellement et étant conçu pour n'autoriser un mouvement de pivotement de la deuxième partie (16b) de l'élément de siège (16) de sa position d'utilisation à sa position de repos que lorsque le commutateur d'activation (28) est actionné, le commutateur d'activation (28) étant disposé en particulier dans la région d'un accoudoir (30) du siège de passager (10) et/ou étant précontraint dans une position non activée.

11. Siège de passager selon l'une des revendications 1 à 8 et la revendications 9 ou 10,
le mécanisme de déverrouillage (26) comportant une deuxième soupape (54), qui est réglable entre une position de fermeture, dans laquelle la deuxième soupape (54) empêche un mouvement de l'élément de retenue (32) de sa position de retenue à sa position de libération, et une position ouverte, dans laquelle la deuxième soupape (54) autorise un mouvement de l'élément de retenue (32) de sa position de retenue à sa position de libération.

12. Siège de passager selon l'une des revendications 6 à 8 et la revendications 11,
une section transversale, pouvant être traversée, de la première soupape (46) et/ou de la soupape anti-retour (50) étant supérieure à une section transversale, pouvant être traversée, de la deuxième soupape (54) et/ou une section transversale, pouvant être traversée, d'une première conduite (42), dans laquelle la première soupape (46) est disposée, et/ou une section transversale, pouvant être traversée, d'une deuxième conduite (52), dans laquelle la soupape anti-retour (50) est disposée, étant supérieure à une section transversale, pouvant être traversée, d'une troisième conduite (56), dans laquelle la deuxième soupape (54) est disposée.

13. Espace cabine passager (100), qui comporte :
- un couloir principal (102), qui s'étend sensiblement parallèlement à un axe longitudinal (L) de l'espace cabine passager (100),
- un couloir transversal (114) bifurquant à partir du couloir principal (102) et
- au moins un siège passager (10) selon l'une des revendications 1 à 12, qui est disposé dans l'espace cabine passager (100) de manière adjacente au couloir transversal (114) de telle sorte que l'élément de siège (16) du siège passager (10) est tourné vers le couloir transversal (114).
